(19) Europäisches Patentamt

European Patent Office

Office européen des brevets

(11) Numéro de publication: **0 184 499 B1**

(12) **FASCICULE DE BREVET EUROPEEN**

(45) Date de publication de fascicule du brevet: **08.07.92**    (51) Int. Cl.⁵: **G01N 25/48**

(21) Numéro de dépôt: **85402320.7**

(22) Date de dépôt: **27.11.85**

(54) **Calorimètre à écoulement de fluide, basse température et haute pression.**

(30) Priorité: **30.11.84 FR 8418316**

(43) Date de publication de la demande:
**11.06.86 Bulletin 86/24**

(45) Mention de la délivrance du brevet:
**08.07.92 Bulletin 92/28**

(84) Etats contractants désignés:
**DE GB IT**

(56) Documents cités:
**DE-A- 2 513 342**
**DE-A- 2 608 497**
**US-A- 3 812 713**

**CRYOGENICS, vol. 24, no. 7, juillet 1984, pages 339-346, Butterworth & Co., Ltd, Guildford, Surrey, GB; H. PIEPER etal.:**
**"Measurements of caloric properties of fluids at low temperature and high pressures**

(73) Titulaire: **SOCIETE NATIONALE ELF AOUITAINE (PRODUCTION)**
**Tour Elf, 2, Place de la Coupole, La Défense 6**
**F-92400 Courbevoie(FR)**

(72) Inventeur: **Setier, Jean-Claude**
**5, rue du Gui**
**F-64000 Pau(FR)**
Inventeur: **Alexandre, Gérard**
**Relais de la Pierre St Martin Saint Engrace**
**F-64560 Licq Atherey(FR)**
Inventeur: **Ladesbie, René**
**Chaussée de Dax**
**F-64300 Orthez(FR)**

(74) Mandataire: **Boillot, Marc**
**SOCIETE NATIONALE ELF AOUITAINE Division Propriété Industrielle Tour Elf**
**F-92078 Paris la Défense Cédex 45(FR)**

# Description

L'invention est relative à un calorimètre à écoulement de fluide et elle concerne plus particulièrement, mais non pas de manière exclusive, un calorimètre à flux destiné à la mesure des différences d'enthalpies de fluides à basse température et haute pression.

On sait que la méthode de débit constant de fluide peut donner de très bons résultats tout en présentant une utilisation pratique. Elle consiste à faire passer le fluide, à une température donnée, avec un débit massique fixé et en maintenant une pression constante, dans un calorimètre où une puissance électrique lui est transmise et où on mesure l'élévation de température subie par le fluide en mouvement.

La variation d'enthalpie correspondant à cette élévation de température est égale au rapport de la puissance électrique sur le débit de fluide.

Plusieurs tentatives ont été faites pour mettre en oeuvre ce principe de mesure, à basse température et haute pression, parmi les différents appareils proposés, on connaît un certain nombre de calorimètres où les températures mesurées sont des températures de peau sur les parois de l'appareil pour éviter toute fuite possible.

T. MIYASAKI dans "J. CHEMICAL THERMODINAMICS 1980" (A New High Pressure Recycle-Flow Calorimeter) propose d'amener les fils de la résistance chauffante et les fils pour la mesure des températures conjointement par l'intermédiaire d'une gaine, jusqu'à la température ambiante.

Ces dispositifs présentent des inconvenients majeurs. D'une part, ils sont souvent très encombrants et nécessitent des débits élevés. De plus, ils ne peuvent pas être très précis, soit que les températures mesurées ne sont pas les températures du fluide lui-même (température de peau), soit que la conduction due à la gaine d'amenée des fils ne permette pas une mesure réelle de la température. De plus, dans ce dernier cas, la proximité des fils de mesure et de puissance entraîne une élévation en température des premiers qui nuit à la justesse de la mesure.

La présente invention a pour but de remédier à ces inconvénients. Pour cela l'invention prévoit un calorimètre à écoulement de fluide à débit massique constant, à basse température et haute pression équipé d'une source d'énergie électrique et d'au moins deux capteurs de température un en amont et un en aval de la source d'énergie caractérisés selon les termes de la partie caractérisante de la revendication 1.

Selon une première variante l'invention, la puissance électrique est fournie au fluide par l'intermédiaire d'un fil bobiné à l'intérieur du calorimètre qui remplit tout l'espace intérieur.

Une deuxiéme variante de l'invention est que les mesures de températures sont faites par des sondes de platine dont on peut régler la position dans les parties juste en amont et juste en aval de la source d'énergie électrique.

Une troisième variants de l'invention est que l'étanchéité à la température et à la pression des sorties de fils est obtenue par collage.

Enfin le calorimètre, selon l'invention est de petite taille et entièrement démontable.

Les avantages obtenus grâce à cette invention sont très importants. On évite tout problème de conduction et de fuites thermiques en séparant les fonctions puissances des fonctions mesures et en réalisant des sorties de fils (indépendantes les unes des autres) à proximité de l'endroit où a lieu la mesure.

On minimise les pertes par rayonnement de la source d'énergie en étant capable de régler la position des capteurs de température par rapport à ladite source.

En outre, les échanges de chaleur entre la source de puissance et le fluide sont optimaux puisqu'il y a contact direct et que la résistance sert elle-même d'échangeur. De plus, ce calorimètre est, très pratique puisque démontable et permet d'avoir des débits assez faibles grâce à sa taille, d'où une économie de produit.

Le dispositif est également remarquable en ce que l'on peut rajouter au même niveau que les sondes de platine, des thermocouples pour l'obtention et la vérification d'une stabilité thermique parfaite.

Un mode de réalisation particulier est exposé ci-après plus en détail en référence aux dessins annexés. Il est donné à titre d'exemple et ne limite pas l'étendue de l'invention.

- La figure 1 représente une vue en coupe longituinale d'un calorimètre selon l'invention.
- La figure 2 est une vue schématisée d'un cas particulier de la figure 1.

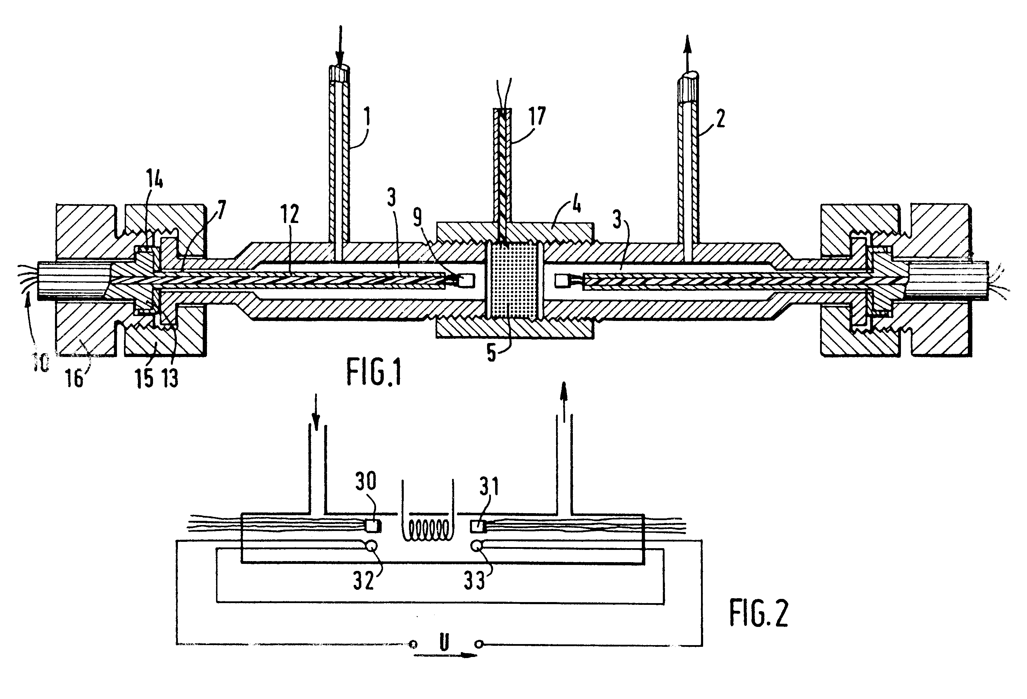

On a représenté sur la figure 1 une vue en coupe longitudinale d'un exemple de calorimètre selon l'invention. Il comprend essentiellement une conduite d'amenée (1) et de sortie (2) du fluide, qui aboutissent dans la "chambre" de mesure (3) uniaxiale. Cette "chambre" de mesure est en deux parties symétriques réunies entre elles par l'écrou (4) dans lequel est bobiné une résistance (5). A chaque extrémité de la "chambre" est ménagée une sortie (7) pour les fils des sondes de platine.

Conformément à la présente invention le fluide une fois amené en température par un cryostat non représenté sur la figure, est acheminé par la conduite (1) jusqu'à la chambre de mesure (3). La mesure de la température amont est réalisée par la sonde de platine (9). Cette mesure est transmise par l'intermédiaire des fils (10) directement vers l'extérieur pour enregistrement. Ces fils passent dans un tube (12) qui possède une partie annulaire plus épaisse (13) qui vient buter avec le joint de métal mou (14) sur l'extrémité de la "chambre" de mesure. Ledit tube est maintenu en position par vissage de l'écrou (15) sur le boulon creux (16).

On obtient ainsi une première étanchéité à la pression. Il est nécessaire de prévoir une deuxième étanchéité à l'intérieur du tube de passage des fils. Elle est obtenue par enduction d'une colle spéciale sur une certaine longueur de tube et des fils. Cette colle, qui peut accessoirement servir d'isolant pour les fils doit pouvoir garder ses propriétés aux basses températures et hautes pressions. On a par exemple utilisé une colle commercialisée sous la marque "ECCOBOND 285" avec un durcisseur "CATALYST 24 LV".

La mesure de température n'est pas effectuée immédiatement à l'intersection de la conduite et de la "chambre" de mesure car c'est une zone de détente qui n'est donc pas propice à une bonne précision, mais elle peut avoir lieu entre ladite intersection et une extrémité de la résistance.

Le fluide passe ensuite par les petits interstices de la résistance bobinée (5) qui occupe toute la section de passage. La longueur de bobinage dépend de la puissance voulue. Les fils d'alimentation sont sortis directement par l'ouverture (17) ménagée dans l'écrou (4). L'étanchéité étant ici aussi obtenue par le même type- de colle que celui cité ci-dessus.

Le fluide est donc chauffé au travers dudit bobinage où les échanges sont quasi parfaits compte tenu de la surface d'échange au passage du fluide sur le fil. La température du fluide après échauffement est alors mesurée en aval par un dispositif semblable à celui décrit ci-dessus.

On a représenté sur la figure 2 une vue schématique du calorimètre selon l'invention avec deux sondes de platine (30) et (31) et deux thermocouples (32) et (33) montés en opposition. Il est en effet possible de disposer au niveau de chaque sonde de platine un thermocouple dont les fils passent par le même tube (12) (figure 1).

L'enregistrement de la force électromotrice U délivrée par ces deux thermocouples permet de contrôler la stabilité du système.

**Revendications**

1. Calorimètre à écoulement de fluide à débit massique constant, à basse température et haute pression équipé d'une source (5) d'énergie électrique, d'un capteur (9) de température amont et d'un capteur de température aval, caractérisé en ce que lesdits capteurs et ladite source d'énergie (5) sont disposés au sein du fluide et les sorties des fils électriques respectifs pour l'alimentation de ladite source (5) d'énergie et pour les mesures de température sont réalisées à l'extérieur du fluide, indépendantes les ures des autres et disposées à proximité de l'endroit où ont lieu lesdites mesures.

2. Calorimètre selon la revendication 1 caractérisé en ce que la source (5) d'énergie électrique est un fil bobiné très serré occupant toute la section de passage du fluide.

3. Calorimètre selon la revendication 1 caractérisé en ce que la partie contenant la source (5) d'énergie est amovible et peut être changée selon la puissance voulue.

4. Calorimètre selon la revendication 1 caractérisé en ce que des mesures de températures sont réalisées par des sondes de platine qui peuvent être positionnées à la distance désirée de la source d'énergie (5).

5. Calorimètre selon la revendication 1 caractérisé en ce que chaque capteur de température peut être démonté et remplacé séparément.

6. Calorimètre selon la revendication 1 caractérisé en ce que l'étanchéité du passage des fils, aux basses températures et hautes pressions est obtenue par collage.

7. Calorimètre selon la revendication 1 caractérisé en ce que deux thermocouples (32,33) montés en opposition sont rajoutés au niveau des capteurs de température.

**Claims**

1. Calorimeter with a fluid flow at a constant mass flow rate and at low temperature and high pressure, equipped with an electrical energy source (5), an upstream temperature sensor (9) and a downstream temperature sensor, characterised in that the said sensors and the said energy source (5) are disposed within the fluid and the exits for the respective electrical leads for supplying the said energy source (5) and for measuring the temperature are provided externally of the fluid, independent of one another and are disposed in the vicinity of the location where the said measurements are taken.

2. Calorimeter according to Claim 1, characterised in that the electrical energy source (5) is a very tightly wound coil occupying the entire cross-section of the fluid passage.

3. Calorimeter according to Claim 1, characterised in that the section comprising the energy source (5) is detachable and can change according to the desired power.

4. Calorimeter according to Claim 1, characterised in that the temperatures are measured by platinum sensors which can be positioned at the desired distance from the energy source (5).

5. Calorimeter according to Claim 1, characterised in that each temperature sensor can be removed and replaced separately.

6. Calorimeter according to Claim 1, characterised in that the passage for the wires is sealed against low temperatures and high pressures by adhesive bonding.

7. Calorimeter according to Claim 1, characterised in that two thermo-electric couples (32, 33) mounted opposite one another are disposed at the temperature sensors.

**Patentansprüche**

1. Kalorimeter für eine Fluiddurchströmung mit konstantem Massenstrom bei niedriger Temperatur und hohem Druck, das mit einer elektrischen Energiequelle (5), einem stromaufwärts gelegenen Temperaturfühler (9) und einem stromabwärts gelegenen Temperaturfühler ausgestattet ist, dadurch gekennzeichnet,
   - daß die Fühler und die Energiequelle (5) innerhalb des Fluids angeordnet sind und
   - daß die Ausgänge der jeweiligen elektrischen Leitungen für die Versorgung der Energiequelle (5) und für die Temperaturmessungen unabhängig voneinander außerhalb des Fluids ausgebildet und in der Nähe des Ortes angeordnet sind, wo die Messungen stattfinden.

2. Kalorimeter nach Anspruch 1, dadurch gekennzeichnet, daß die elektrische Energiequelle (5) ein stark gepreßter Wickeldraht ist, der den gesamten Fluiddurchgangsquerschnitt einnimmt.

3. Kalorimeter nach Anspruch 1, dadurch gekennzeichnet, daß der Teil, der die Energiequelle (5) enthält, lösbar ist und gemäß der gewünschten Leistung ausgetauscht werden kann.

4. Kalorimeter nach Anspruch 1, dadurch gekennzeichnet, daß die Temperaturmessungen mittels Platinsonden durchgeführt werden, die im gewünschten Abstand von der Energiequelle (5) positioniert werden können.

5. Kalorimeter nach Anspruch 1, dadurch gekennzeichnet, daß jeder Temperaturfühler getrennt abmontiert und ersetzt werden kann.

6. Kalorimeter nach Anspruch 1, dadurch gekennzeichnet, daß die Abdichtung des Durchgangs der Leitungen bei tiefen Temperaturen und hohen Drücken durch Verkleben erzielt wird.

7. Kalorimeter nach Anspruch 1, dadurch gekennzeichnet, daß auf der Höhe der Temperaturfühler zwei gegenüberliegend angebrachte Thermoelemente (32, 33) hinzugefügt sind.

**FIG.1**

**FIG.2**